(19) Europäisches Patentamt
European Patent Office
Office européen des brevets

(11) Veröffentlichungsnummer : **0 078 412**
**B1**

(12) # EUROPÄISCHE PATENTSCHRIFT

(45) Veröffentlichungstag der Patentschrift : **06.05.87**

(51) Int. Cl.⁴ : **B 01 D 53/34**

(21) Anmeldenummer : **82109242.6**

(22) Anmeldetag : **06.10.82**

(54) **Verfahren und Vorrichtung zur Regenerierung von physikalisch wirkenden organischen Waschflüssigkeiten.**

(30) Priorität : **21.10.81 DE 3141770**

(43) Veröffentlichungstag der Anmeldung : **11.05.83 Patentblatt 83/19**

(45) Bekanntmachung des Hinweises auf die Patenterteilung : **06.05.87 Patentblatt 87/19**

(84) Benannte Vertragsstaaten : **AT BE CH DE FR GB IT LI NL**

(56) Entgegenhaltungen :
**DE-A- 2 848 721**
**DE-C- 637 428**
**DE-C- 1 025 405**

(73) Patentinhaber : **Linde Aktiengesellschaft**
**Abraham-Lincoln-Strasse 21**
**D-6200 Wiesbaden (DE)**

(72) Erfinder : **Karwat, Heinz, Dr., Dipl.-Chem.**
**Gistlstrasse 60**
**D-8023 Pullach (DE)**
Erfinder : **Häussinger, Peter, Dr. Dipl.-Chem.**
**Am Brombeerschlag 26**
**D-8000 München 70 (DE)**

(74) Vertreter : **Schaefer, Gerhard, Dr.**
**Linde Aktiengesellschaft Zentrale Patentabteilung**
**D-8023 Höllriegelskreuth (DE)**

**EP 0 078 412 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren und eine Vorrichtung zur Entfernung von $SO_2$ und gegebenenfalls $SO_3$ und $CO_2$ aus getrocknetem Rauchgas mittels einer physikalisch wirkenden organischen Waschflüssigkeit in einer Gaswäsche und Regenerierung der beladenen Waschflüssigkeit.

Bei der Verbrennung fossiler schwefelhaltiger Brennstoffe enthalten die Abgase erhebliche Mengen an Schwefeldioxid, gegebenenfalls auch an Schwefeltrioxid, die beide wegen ihrer Fähigkeit, mit Wasser schweflige bzw. Schwefelsäure zu bilden, als äußerst umweltschädlich gelten. Sie müssen deshalb, insbesondere dort, wo Verbrennungsabgase in großer Menge entstehen, beispielsweise in Kraftwerken, aus den Abgasen möglichst weitgehend entfernt werden, bevor diese in die Atmosphäre austreten.

Zur Entfernung sind beispielsweise Wäschen mit wäßrigen Lösungen von Alkali- oder Erdalkaliverbindungen bekannt. In neuerer Zeit hat sich auch das für andere Gasreinigungszwecke bereits bewährte Dimethylformamid, ein physikalisch wirkendes organisches Waschmittel, sehr bewährt. Es hat gegenüber den ersterwähnten chemisch wirkenden Waschmitteln den Vorteil einer relativ leichten Regenerierbarkeit, da sich die zu entfernenden Bestandteile hierin lediglich lösen, während sie bei den chemisch wirkenden Waschmitteln durch eine chemische Reaktion gebunden werden.

Die Leichtigkeit der Regenerierung spielt insbesondere bei solchen Bestandteilen wie Schwefeldioxid oder Schwefeltrioxid eine bedeutende Rolle, da hierdurch Einfachheit und Handhabbarkeit eines Abgas-Waschverfahrens entscheidend beeinflußt werden.

In der DE-OS 28 48 721 ist ein Verfahren zur Entfernung unerwünschter gasförmiger Bestandteile aus heißen Abgasen beschrieben. Bei diesem bekannten Verfahren wird Schwefeldioxid aus bei der Verbrennung kohlenstoffhaltiger Brennstoffe anfallenden Abgasen unterhalb von 0 °C beispielsweise mit Dimethylformamid ausgewaschen. Das absorbierte Schwefeldioxid wird aus der beladenen Waschflüssigkeit anschließend bei unteratmosphärischem Druck und Temperaturen von ca. 70 °C ausgetrieben. Die dazu benötigte Regeneriersäule muß am Sumpf ständig beheizt werden. Zusätzlich ist bei dieser Regenerierung von beladenem Dimethylformamid darauf zu achten, daß letzteres in der Regeneriersäule nicht hydrolisiert wird. Die Hydrolyse tritt bevorzugt bei höheren Temperaturen in saurer wäßriger Lösung auf. Schwefeldioxid und/oder Schwefeltrioxid enthaltende Gase führen aber im allgemeinen auch Wasserdampf mit, so daß die Möglichkeit der Einführung geringer Mengen an Schwefelsäure in die Regeneriersäule nicht ausgeschlossen werden kann. Um unterhalb des Temperaturbereiches arbeiten zu können, in dem die Hydrolyse bevorzugt auftritt, wir die Regenerierung beim bekannten Verfahren bei deutlich unteratmosphärischem Druck durchgeführt. Zwar braucht in diesem Fall der Säulensumpf nicht so stark geheizt zu werden, dafür muß aber ständig Energie zur Aufrechterhaltung des unteratmosphärischem Drucks aufgebracht werden.

Das bekannte Verfahren erfordert somit insgesamt einen relativ hohen apparativen und energetischen Aufwand bei der Regenerierung des beladenen Waschmittels.

Aus der DE-C 1 025 405 ist darüber hinaus bekannt, Ammoniumsulfat aus $SO_2$ enthaltenden Rauchgasen zu gewinnen, wobei $SO_2$ mittels einer physikalisch wirkenden Waschflüssigkeit absorbiert wird und unter Zugabe von Ammoniak die Waschflüssigkeit regeneriert wird. Der Erfindung liegt die Aufgabe zugrunde, ein Verfahren zur Entfernung von $SO_2$ und gegebenenfalls $SO_3$ und $CO_2$ aus Rauchgas mittels einer physikalisch wirkenden organischen Waschflüssigkeit in einer Gaswäsche zur Verfügung zu stellen, das hinsichtlich des apparativen und energetischen Aufwandes bei der Regenerierung des beladenen Waschmittels günstiger arbeitet als das bekannte Verfahren.

Diese Aufgabe wird erfindungsgemäß gelöst durch ein Verfahren zur Entfernung von $SO_2$ und gegebenenfalls $SO_3$ und $CO_2$ aus getrocknetem Rauchgas mittels einer physikalisch wirkenden organischen Waschflüssigkeit in einer Gaswäsche und Regenerierung der beladenen Waschflüssigkeit, nach gegebenenfalls erforderlicher $CO_2$-Abtrennung, mittels Ammoniak und Wasser, wobei das sich bildende Ammoniumsulfit und gegebenenfalls Ammoniumsulfat abgetrennt werden und die Waschflüssigkeit zur Gaswäsche zurückgeführt wird.

Durch die Anwendung des erfindungsgemäßen Verfahrens ergeben sich erhebliche verfahrenstechnische Vorteile, da es nun nicht mehr erforderlich ist, eine Regeneriersäule ständig am Sumpf zu heizen und am Kopf zu kühlen. Die Aufrechterhaltung großer Temperaturunterschiede zwischen Wäsche und Regenerierung ist bei dem erfindungsgemäßen Verfahren vom Prinzip her nicht mehr erforderlich.

Das erfindungsgemäße Verfahren macht sich die beiden Reaktionen

$$2NH_3 + H_2O + SO_2 = (NH_4)_2SO_3 \text{ und}$$

$$2NH_3 + H_2O + SO_3 = (NH_4)_2SO_4$$

zunutze.

Somit wird zur Regenerierung lediglich Ammoniak, ein sehr preiswertes chemisches Produkt, und Wasser benötigt. Falls Wasser nicht bereits in entsprechenden Mengen im Rohgas oder in der umlaufenden Waschflüssigkeit enthalten ist, muß es zusammen mit dem Ammoniak zugesetzt werden.

Bei steigender Konzentration von Ammoniumsulfit bzw. -sulfat in der Waschflüssigkeit wird an einem

von der Temperatur abhängigen Punkt die Löslichkeitsgrenze überschritten, wo diese Verbindungen beginnen sich in fester Form abzuscheiden. Das Einführen von Ammoniak wird dann so lange fortgesetzt, bis das in der Waschflüssigkeit gelöste Schwefeldioxid bzw. Schwefeltrioxid praktisch vollständig umgesetzt ist.

Die Kristalle werden dann von der Waschflüssigkeit mit Hilfe irgendeines bekannten Verfahrens, beispielsweise Filtrieren oder Zentrifugieren, abgetrennt.

Es hat sich auch als vorteilhaft erwiesen, die Waschflüssigkeit während der Regenerierung, also während des Einführens von Ammoniak, oder nach Beendigung der Einführung auf die tiefste Verfahrenstemperatur zu kühlen, um ein nachträgliches Ausfallen der Salze, z. B. nach der Filtration, zu verhindern.

Gemäß einer besonderen Ausbildung des Erfindungsgedankens wird der Ammoniak nicht gasförmig in die Waschflüssigkeit eingeführt, sondern flüssig, da er mit seiner relativ hohen Verdampfungswärme von 249 kcal/$Nm^3$ eine erhebliche Abkühlung des zu regenerierenden Waschmittels bewirkt und so die Notwendigkeit der Wärmeabfuhr nach außen verringert.

Im Prinzip wird zwar angestrebt, das im Waschmittel gelöste $SO_2$ bzw. $SO_3$ möglichst vollständig mit Ammoniak umzusetzen, doch soll der Ammoniak keinesfalls im Überschuß zugegeben werden, da er sonst während der Abgaswäsche aus dem Waschmittel ausgetrieben und in die Atmosphäre gelangen würde, was einen wirtschaftlichen, Verlust und/oder eine Umweltbelästigung bedeuten würde. Zur Sicherheit wird deshalb der Ammoniak nur im Unterschuß zugesetzt, damit dieser Störfall vermieden wird. Gewisse, im Waschmittel verbleibende Reste an $SO_2$ bzw. $SO_3$ stören nicht, solange die gewünschte Reinigungswirkung des Waschprozesses nicht beeinträchtigt wird.

In besonderen Fällen, beispielsweise bei Abgasen, die wenig $SO_2$ bzw. $SO_3$ enthalten, oder wenn der Hauptbestandteil des Schwefels aus dem Abgas als $SO_2$ gewonnen werden soll und wenn lediglich der $SO_3$-Pegel im Waschmittel begrenzt werden soll, hat es sich als ausreichend bzw. in apparativer Hinsicht besonders zweckmäßig erwiesen, nur einen Teil des umlaufenden Waschmittels abzuzweigen und der Regenerierung durch Ausfällen als Ammonsalze zuzuführen, so daß auf diese Weise mit Hilfe einer äußerst sparsamen Regenerierung stets ein niedriger, noch tolerierbarer $SO_2$- und $SO_3$-Pegel in der Waschflüssigkeit aufrechterhalten wird.

Das erfindungsgemäße Regenerierverfahren läßt sich bei folgenden physikalisch wirkenden organischen Waschmitteln anwenden :

Amide, insbesondere Dimethylformamid, Alkohole, insbesondere Methylalkohol, Glykole, insbesondere Äthylenglykole und substituierte Polyäthylenglykole, und Ester, insbesondere Essigsäureäthylester.

Die Erfindung betrifft überdies eine Vorrichtung zur Durchführung des Verfahrens mit einem $CO_2$-Stripper. Eine derartige Vorrichtung ist dadurch gekennzeichnet, daß der Sumpf des Strippers mit einem Reaktor verbunden ist, der eine Zufuhrleitung für Ammoniak und Wasser aufweist mit einem Rührwerk ausgestattet ist, wobei der Sumpf des Reaktors mit einer Filteranordnung in Verbindung steht, deren Filtratteil mit dem Kopf einer Waschsäule verbunden ist.

Das bei der Regenerierung gebildete Ammoniumsulfit bzw. -sulfat läßt sich nutzbringend weiterverwenden, letzteres beispielsweise in der Landwirtschaft als Düngemittel.

Die Erfindung sei nunmehr anhand eines Ausführungsbeispiels noch näher beschrieben.

600 000 $Nm^3$ feuchtes Rauchgas folgender Zusammensetzung

| | Mol-% | $Nm^3$/h |
|---|---|---|
| $N_2$+Ar | 74,9 | 449 400 |
| $O_2$ | 4 | 24 000 |
| $CO_2$ | 14 | 84 000 |
| $SO_2$ | 0,1 | 600 |
| $H_2O$ | 7 | 42 000 |
| | | 600 000 |

$SO_3$-Gehalt : 30 vppm

werden in einer (nicht dargestellten) Regeneratoranlage auf —50 °C abgekühlt, wobei sich die Hauptmenge des Wasserdampfes auf der Regeneratorschüttung niederschlägt, zusammen mit 4,5 $Nm^3$/h $SO_2$ und rund 15 $Nm^3$/h $SO_3$.

558 000 $Nm^3$/h praktisch trockenes Rauchgas, enthaltend 595,5 $Nm^3$/h $SO_2$ und ca. 3 $Nm^3$/h $SO_3$ (hauptsächlich in Form von Schwefelsäurenebel) treten in den Waschturm 1 durch Leitung 2 ein. Durch Leitung 3 gelangen 98 t/h Dimethylformamid (DMF) mit einer Temperatur von —50 °C auf den Waschturm 1 und fließen dem im Waschturm aufsteigenden Rauchgas entgegen. Der Druck im Waschturm liegt bei 1,2 bar. Dabei nimmt das Waschmittel DMF $SO_2$ und etwas $CO_2$ sowie Schwefelsäu-

renebel und $SO_3$ auf. Das Rauchgas verläßt durch Leitung 4 den Waschturm mit einem $SO_2$-Gehalt von nur noch 70 vppm. Es wird durch die nicht dargestellte Regeneratoranlage abgezogen.

Mit 556,5 $Nm^3/h$ entsprechend 24,8 kgmol/h $SO_2$, etwa 10 kg/h Schwefelsäure und 760 $Nm^3/h$ $CO_2$ in gelöstem Zustand verläßt das Waschmittel durch Leitung 5 den Waschturm 1 und gelangt in den $CO_2$-Stripper 6. Durch Leitung 7 werden dem im Stripper 6 herabrieselnden Waschmittel 6 500 $Nm^3/h$ Luft mit einer Temperatur von —50 °C entgegengeschickt, wobei das gelöste $CO_2$ entgast und zusammen mit dem verbrauchten Strippgas durch Leitung 8 den Stripper verläßt. Mit Pumpe 9 wird das beladene Waschmittel nun in den Reaktor 10 gefördert. Durch Leitung 11 wird eine Lösung von Ammoniak und Wasser, enthaltend 847 kg/h entsprechend 49,9 kgmol/h $NH_3$ und 447 kg/h entsprechend 24,8 kgmol/h $H_2O$ in den Reaktor dosiert. Zur besseren Durchmischung der Flüssigkeit im Reaktor 10 dient das Rührwerk 12. Bei der Reaktion werden 1,1 Mio kcal/h freigesetzt, die von dem Waschmittel aufgenommen und über eine Kühlschlange 13 von in der Kühlschlange verdampfendem Kältemittel abgeführt werden.

Mit der Pumpe 14 wird die Suspension von 2 882 kg/h gebildetem Ammoniumsulfit und 13 kg/h Ammoniumsulfat in DMF auf ein rotierendes Filter 15 gefördert. Das Filtrat wird als regeneriertes Waschmittel durch Pumpe 16 in Leitung 3 zur Waschsäule geführt. Mit einem Abstreifer 17 wird das produzierte Salz vom Filter entfernt.

**Patentansprüche**

1. Verfahren zur Entfernung von $SO_2$ und gegebenenfalls $SO_3$ und $CO_2$ aus getrocknetem Rauchgas mittels einer physikalisch wirkenden organischen Flüssigkeit in einer Gaswäsche und Regenerierung der beladenen Waschflüssigkeit, nach gegebenenfalls erforderlicher $CO_2$-Abtrennung, mittels Ammoniak und Wasser, wobei das sich bildende Ammonium-Sulfit und gegebenenfalls Ammoniumsulfat abgetrennt werden und die Waschflüssigkeit zur Gaswäsche zurückgeführt wird.

2. Verfahren nach Anspruch 1, dadurch gekennzeichnet, daß der Ammoniak gasförmig in die Waschflüssigkeit eingeführt wird.

3. Verfahren nach Anspruch 1, dadurch gekennzeichnet, daß der Ammoniak flüssig in die Waschflüssigkeit eingeführt wird.

4. Verfahren nach den Ansprüchen 1 bis 3, dadurch gekennzeichnet, daß der Ammoniak im Unterschuß in die Waschflüssigkeit eingeführt wird.

5. Verfahren nach den Ansprüchen 1 bis 4, dadurch gekennzeichnet, daß der Ammoniak nur in einen Teil der beladenen Waschflüssigkeit eingeführt wird.

6. Verfahren nach den Ansprüchen 1 bis 5, dadurch gekennzeichnet, daß in der Waschflüssigkeit gebildetes Ammoniumsulfit und gegebenenfalls Ammoniumsulfat durch Abkühlen der Waschflüssigkeit ausgefällt und danach abfiltriert wird.

7. Verfahren nach den Ansprüchen 1 bis 6, dadurch gekennzeichnet, daß während der Wäsche gegebenenfalls mitaufgenommenes Kohlendioxid vor der Einführung des Ammoniaks aus der beladenen Waschflüssigkeit entfernt wird.

8. Vorrichtung zur Durchführung des Verfahrens nach Anspruch 1 mit einem $CO_2$-Stripper, dadurch gekennzeichnet, daß der Sumpf des $CO_2$-Strippers (6) mit einem Reaktor (10) verbunden ist, der eine Zufuhrleitung (11) für Ammoniak und Wasser aufweist und mit einem Rührwerk (12) ausgestattet ist, wobei der Sumpf des Reaktors (10) mit einer Filteranordnung (15) in Verbindung steht, deren Filtratteil mit dem Kopf einer Waschsäule verbunden ist.

**Claims**

1. A process for removing $SO_2$ and, where appropriate, $SO_3$ and $CO_2$, from dried flue gas by means of a physically-acting organic liquid in a gas wash step and regeneration of the charged washing liquid, where necessary, after the separation of the $CO_2$, by means of ammonia and water, wherein the ammonium sulphite and where appropriate ammonium sulphate which form, are separated and the washing liquid is returned to the gas wash step.

2. A process as claimed in Claim 1, characterised in that the ammonia is introduced into the washing liquid in gaseous form.

3. A process as claimed in Claim 1, characterised in that the ammonia is introduced into the washing liquid in liquid form.

4. A process as claimed in Claims 1 to 3, characterised in that the ammonia is introduced into the washing liquid in deficiency.

5. A process as claimed in Claims 1 to 4, characterised in that the ammonia is introduced into only a part of the charged washing liquid.

6. A process as claimed in Claim 1 to 5, characterised in that ammonium sulphite (and where appropriate ammonium sulphate) formed in the washing liquid is precipitated by cooling the washing liquid and is then filtered off.

7. A process as claimed in Claims 1 to 6, characterised in that any carbon dioxide additionally picked

up during the wash is removed from the charged washing liquid prior to the introduction of the ammonia.

8. Apparatus for carrying out the process claimed in Claim 1 comprising a $CO_2$-stripper, characterised in that the sump of the $CO_2$-stripper (6) is connected to a reactor (10) which is provided with a supply line (11) for ammonia and water and is equipped with an agitator (12), the sump of the reactor (10) being connected to a filter arrangement (15), the filter element of which is connected to the head of a washing column.

**Revendications**

1. Procédé pour l'élimination du $SO_2$ et, le cas échéant, de $SO_3$ et $CO_2$ contenus dans des fumées après séchage, par lavage des fumées à l'aide d'un liquide organique à action physique, et pour la régénération du liquide de lavage chargé d'impuretés, après séparation éventuelle du $CO_2$ à l'aide d'ammoniac et d'eau, dans lequel on sépare le sulfite d'ammonium et, le cas échéant, le sulfate d'ammonium qui se forment et on recycle le liquide de lavage vers l'étape de lavage des gaz.

2. Procédé selon la revendication 1, caractérisé en ce que l'on introduit l'ammoniaque à l'état de gaz dans le liquide de lavage.

3. Procédé selon la revendication 1, caractérisé en ce que l'on introduit l'ammoniac à l'état liquide dans le liquide de lavage.

4. Procédé selon les revendications 1 à 3, caractérisé en ce qu'on introduit une quantité insuffisante d'ammoniac dans le liquide de lavage.

5. Procédé selon les revendications 1 à 4, caractérisé en ce que l'on n'introduit l'ammoniac que dans une partie du liquide de lavage chargé d'impuretés.

6. Procédé selon les revendications 1 à 5, caractérisé en ce que le sulfite d'ammonium et, le cas échéant, le sulfate d'ammonium formé(s) dans le liquide de lavage est (sont) précipité(s) par refroidissement du liquide de lavage, puis éliminé(s) par filtration.

7. Procédé selon les revendications 1 à 6, caractérisé en ce qu'on élimine du liquide de lavage chargé d'impuretés, avant introduction de l'ammoniac, le dioxyde de carbone éventuellement absorbé pendant le lavage.

8. Dispositif pour la mise en œuvre du procédé selon la revendication 1, comportant un séparateur de $CO_2$, caractérisé en ce que la cuve du séparateur de $CO_2$ (6) est reliée à un réacteur (10) qui comporte une conduite d'amenée (11) d'ammoniac et d'eau ainsi qu'un appareil agitateur (12), cependant que la cuve du réacteur (10) est reliée à un dispositif de filtration (15) dont la partie renfermant le filtrat est reliée à la tête d'une colonne de lavage.

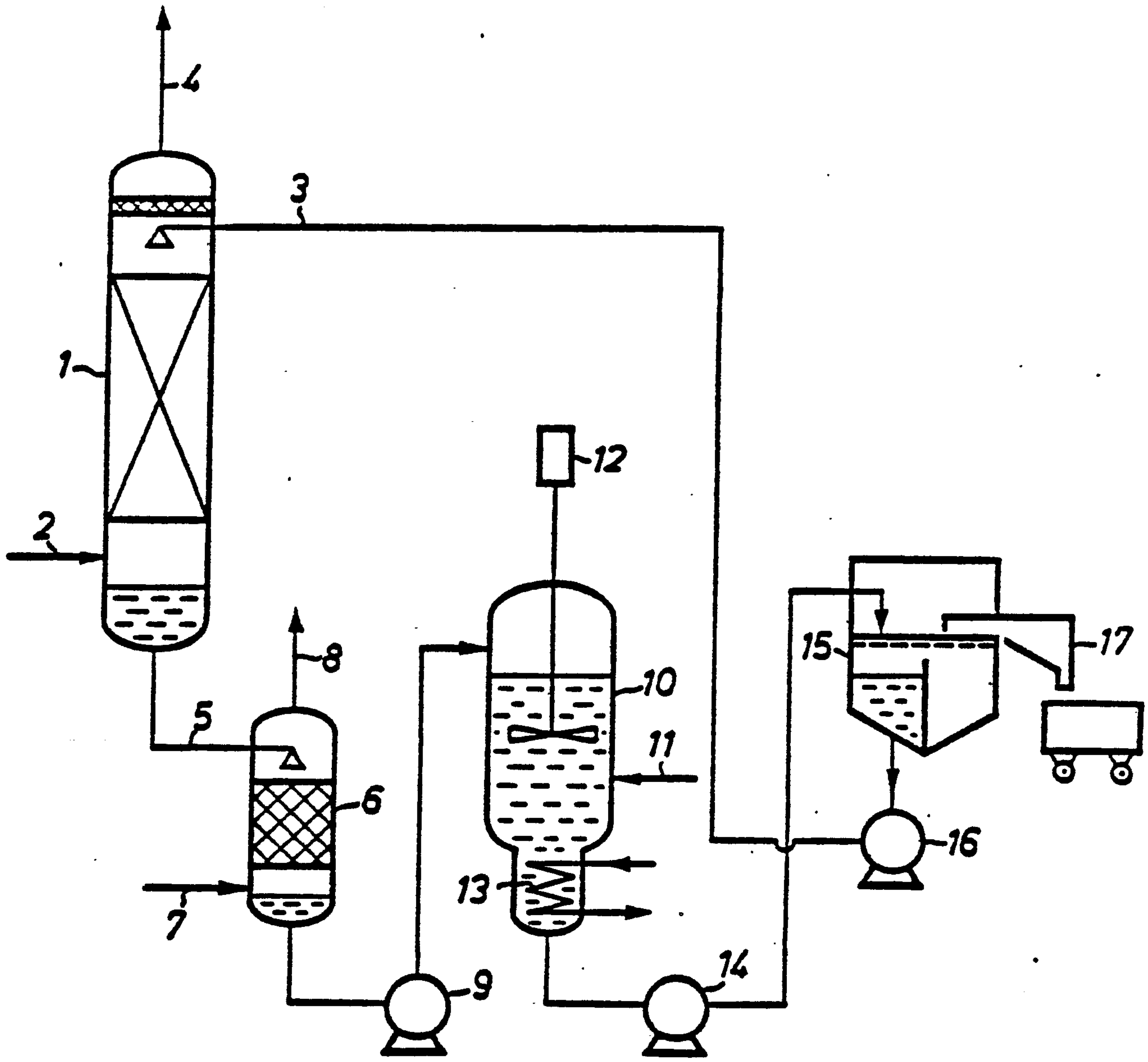
4
3
1
2
12
8
5
6
7
10
11
13
9
14
15
17
16